# EUROPEAN PATENT SPECIFICATION

(11) **EP 3 657 119 B1**
(45) Date of publication and mention of the grant of the patent: **17.11.2021**
(21) Application number: 19169532.9
(22) Date of filing: 16.04.2019
(51) Int. Cl.: F41B 15/02

(54) **EXPANDABLE TELESCOPIC BATON**
AUSZIEHBARER TELESKOPSTAB
BATON TÉLESCOPIQUE EXTENSIBLE

(30) Priority: 21.11.2018 CZ 20180640
(43) Date of publication of application: 27.05.2020
(73) Proprietor: Kostal, Bretislav, 106 00 Praha 10 (CZ); Kupa, Vladimír, 150 00 Praha 5 (CZ)
(72) Inventor: Kostal, Bretislav, 106 00 Praha 10 (CZ); Kupa, Vladimír, 150 00 Praha 5 (CZ)
(74) Representative: Sedlák, Jirí

(56) References cited:
- EP-A1- 1 583 932
- CN-A- 107 560 497
- CN-U- 204 027 431
- US-A1- 2016 169 616

## Description

### Field of the Invention

The invention relates to an expandable telescopic baton suitable for the defence against attack by an attacker or in police, military and guard practice.

### Background of the Invention

Known expandable telescopic batons mostly consist of several main parts. The first part consists of a tubular handle with a terminal and a button. The second part consists of a central tube, telescopically arranged within the tubular handle. The third part consists of an end tube, telescopically arranged within the central tube. The telescopic mounting of the central tube within the handle and the end tube in the central tube is made with an overlap ensuring that the baton does not fall apart when fully extended. Another part consists of grooves and therein fitted locking means, which, when blocked, maintain the first, second and third parts in the extended position of the baton and, when unblocked, allow the telescopic insertion of the first, second and third parts into the folded position of the baton. The last part is the release rod connected to the button, axially running through the first, second and third parts of the baton and controlling the locking means.

The following documents describe typical embodiment of known expandable telescopic batons. In a specific embodiment according to the patent US6238292B1, a tubular central part and a tubular end part have annular grooves, in which the balls of ball bearings fit. These balls fitted in the grooves form locking means holding the baton in the extended position. The baton is folded by means of locking means, which consists of locking members provided with a central bore with a cam surface, and shoulders with two diameters. Larger diameter pushed the balls into the grooves and smaller diameter makes it possible to push out the balls from the grooves, to unblock the locking means and to fold the baton. To control the locking members there is a release rod, running axially through the whole baton, which has a flared end at the end. The flared end has a cam surface engaged with cam surfaces of the locking members.

The flared end also has a slot allowing the radial reduction of the flared end so that the release rod subsequently passes through central bores of the locking members. The disadvantage of this solution is that it is very complex in terms of construction and material-intensive, and grooves for the balls must be very deep so the walls of the tubular parts become thin. The walls of the tubular parts also become thin due to screwed connection of the stops of telescopic tubes in the area of locking balls. The disadvantage of this solution is therefore relatively low strength at high weight.

Other constructional solution is described in document US2016/0169616A1. The locking means comprise semi-circular segments, which are separated from each other by springs and their circumferences fit into the grooves. The segments have lugs which overlap each other partially. The release rod has a tip at the end. When the tip of the release rod passes through the lugs of the locking members, the lugs are forced to one axis and the semi-circular segments slip out of the grooves against the pressure of springs. In this solution, there can easily be wear of the thin end of the release rod or lugs of the segments. This solution is very difficult to manufacture, it is necessary to produce complex screwed members and precise threads in tubes, in which the semi-circular segments are mounted. Another disadvantage is the considerable dimensionality of locking mechanisms. Thus, it is not possible to produce a standard light baton with the thinnest tube with a diameter of 11 mm. In this construction, baton tubes must have a larger diameter, which also means quite greater weight of the baton.

The patent EP1583932B1 describes a reverse design, where, on the contrary, the release rod has a conical enlargement at the end. The locking members consist of plastic crowns, which have radially spaced arms with radial projections at the periphery. The release rod is the telescopic rod, comprising two telescopic parts placed in each other and conically terminated. The conical ends expand arms of the plastic crown and push the radial projections at their ends into the grooves, so they lock the baton in the extended position. When folded, the conical ends of the extension parts of the release rod are removed from the crowns, and the arms of the crowns radially spring back only because of the inherent elasticity of springs and the radial projections slip out of the grooves. The disadvantage of this solution consists in that the arms with radial projections are not mechanically controlled for their extension from the grooves and the folding of the baton. In case of damage to the arms or material defect or fatigue, the baton cannot be folded. Another disadvantage consists in the two-piece telescopic design of the release rod. The thin extension part can be easily damaged or bent, which also leads to the impossibility to fold the baton. The locking mechanism in this solution is also large, i.e. baton with thinner tubes cannot be produced. Moreover, the baton tubes are secured against the disintegration only by means of thin steel rings, which is not reliable solution.

Patent Application CN104964603A describes a three-section telescopic self-locking baton with a multi-petal buckle assembly. This assembly consists of more than two buckle blocks having an annular arrangement, and further consists of one position spring and one multi-petal expanding coil spring. The assembly co-operates with the release red. Function of the assembly is to lock a buckle locking protrusion of the buckle block in a groove in the extended state of the baton as well as to unlock it if in the folded state of the baton. The main disadvantage of this solution is that the assembly does not guide the release rod during its locking and unlocking movement. Thus, the release rod can enter between buckle blocks asymmetrically, so the buckle assembly does not clamp evenly. Some of the buckle blocks can thus remain stuck in the groove of the tube. Furthermore, the multi-petal expanding coil spring is difficult to manufacture, and the positioning spring has no sufficient resilience. A special seat must be made in the tube to tilt the buckle block. The further disadvantage is that the assembly comprises a lot of parts, namely two springs and more than two buckle blocks, which makes it difficult for production and heavy.

The present invention is to provide an expandable telescopic baton, which is easy to manufacture, lightweight, with high strength and reliability in operation, wherein the release rod and the locking members are resistant to shock and ensure reliable extension and folding of the baton, even under severe operating conditions.

### Summary of the Invention

This task has been resolved by the manufacture of the expandable baton according to the disclosed invention. According to the prior art, the expandable telescopic baton consists of a tubular handle provided with a terminal and a button, of a central tube telescopically mounted with an overlap in the handle, and of an end tube telescopically mounted with an overlap in the central tube. The handle and the central tube are provided with internal radial grooves. Further, it consists of a central locking member arranged in the central tube, and of a terminal locking member arranged in the end tube. The locking members are provided with radial projections for fitting in the internal radial grooves in the extended state of the baton. Finally, it consists of a release rod whose one end is connected with a button and the other end fits into the locking members to extend their radial projections from the internal radial grooves when the baton is folded. The central locking member and/or the terminal locking member comprise at least two lever segments of the first order, arranged in a circle in the tube around its axis. Lever segments of the first order are formed by the first tilting arms and the second tilting arms, wherein ends of the first tilting arms extend from the tube and are provided with radial projections for fitting into the internal radial grooves when locking the baton in the extended state. Second tilting arms are all arranged within the tube. Lever segments of the first order are provided on their outer side, to be understood as the side facing the inside of the tube, in the region between the first tilting arm and the second tilting arm, with tilting means for tilting the segments against the inner wall of the tube, and securing means for fixing the position of the segments in the tube against axial displacement. On the inner side, to be understood as the side closer to the tube axis, the segments are provided with an elastic element separating the ends of the first tilting arms with radial projections. Furthermore, the segments on the inner side are dimensionally adjusted so that in the position of fitting of the radial projections into the internal radial grooves, the smallest internal clear distance L₂ between the second tilting arms is smaller than the smallest internal clear distance L₁ between the first tilting arms and at the same time smaller than the diameter (d) of the release rod.

The summary of the invention is in that the segments on the inner side in the region between the first tilting arms and the second tilting arms are provided with guide projections in the shape of part of the ring for fitting against the circumference of the release rod. The release rod first extends between the guide projections and then between the release projections. The guide projections hold the release rod in the tube axis to ensure an even tilting of segments when unlocking the baton and also allow easy and gradual tilting of lever segments of the first order, which are preferably made of metal.

The locking member when inserting the central tube into the handle and the end tube into the central tube operates so that the release rod after pressing the button runs into the central locking member between the lever segments of the first order, pushes apart ends of the second tilting arms, when the lever segments of the first order tilt over the tilting means, while the ends of the first tilting arms get closer to the tube axis. This extends the radial projections from the internal radial groove of the handle and the central tube can be inserted into the handle. The same process occurs at the terminal locking member, where the release bar comes after the central tube is inserted into the handle.

In a preferred embodiment, the tilting means for tilting of the segments against the internal wall of the tube is formed so that the outer side of the first tilting arm has the shape of part of the cylindrical surface and the outer side of the second tilting arm has the shape of part of the conical surface, wherein the shape transition between the first tilting arm and the second tilting arm forms the tilting edge in the shape of part of the ring, fitting against the internal wall of the tube. The tilting means can also be created by other methods known to the expert, but the advantage of this embodiment consists in that the locking members can be easily assembled into the tubes and are simple to manufacture.

In another preferred embodiment, the central locking member and/or the terminal locking member comprises two opposite pairs of segments arranged to form a hollow cylindrical body, where the segments are distributed over its circumference at 90°. The locking members would operate even with a smaller number of segments, e.g. two or three, but in this embodiment, the force required to extend the radial projections from the internal radial grooves is ideally distributed.

In another preferred embodiment, the securing means form a spring ring positioned in a recess formed at the periphery of the first tilting arms of the segments and in the inner tube wall. In this embodiment, the advantage consists again in easy manufacture and easy assembly.

In another preferred embodiment, the elastic element has a toroidal shape and is positioned in the grooves on the inner side of the ends of the first tilting arms. The circular shape of the elastic element is ideal for distribution of the pressing force acting on the radial projections and thus to maintain the reliability of the baton in the extended state.

Another preferred embodiment consists in that in the region of overlap, the handle has a conical part and the central tube has a conical part, wherein the said conical parts fit against each other in the extended position of the central tube, and the end of the central tube is aligned with the internal radial groove in the handle. The conical parts and securing the ends of tubes with radial projections of the segments fitting into the internal radial grooves very significantly enhance the strength of the baton in the extended position in all directions and thereby make it resistant even under adverse conditions.

In a similar preferred embodiment, in the region of overlap, the central tube has a conical part and the end tube has a conical part, wherein the said conical parts fit against each other in the extended position of the end tube, and the end of the end tube is aligned with the internal radial groove in the central tube.

For easy operation of the locking members, the segments are preferably on the inner side of the second tilting arms provided with release projections the shape of part of the ring for fitting against the circumference of the release rod. In this embodiment, the smallest clear distance between the second tilting arms is defined by the edges of the release projections.

Advantages of the expandable telescopic baton of the invention consist especially in that it is easy to manufacture, light-weight, and in particular it has a high strength and reliability in operation even under severe operating conditions. The release rod is one-piece and robust rod as well as the locking members, and its design allows a reliable mechanical insertion and extension of the radial projections into the internal radial grooves, i.e. a reliable locking of the baton in the extended state, and easy and reliable folding of the baton into the folded state. Another significant advantage is due to small size of the locking mechanism the possibility of producing in this way the baton with the end tube of smaller diameter.

### Brief description of drawings

The invention will be explained in detail by drawings where the following is illustrated:
- Fig. 1: sectional view of the expandable telescopic baton in the extended state, with a view of the central locking member and a terminal locking member,
- Fig. 2: sectional view of the expandable telescopic baton as shown in Fig. 1 with partial sectional views of the central locking member and the terminal locking member,
- Fig. 3: sectional view of the expandable telescopic baton in a partially folded state, with the central tube inserted in the handle and with the end tube extended from the central tube,
- Fig. 4: sectional view of the expandable telescopic baton in a fully folded state,
- Fig. 5: sectional view of the terminal locking member in extension of the end tube from the central tube,
- Fig. 6: sectional view of the terminal locking member in insertion of the end tube into the central tube,
- Fig. 7: sectional view of the central locking member in extension of the central tube from the handle, in the embodiment with the guide projection.

### Examples of the invention embodiments

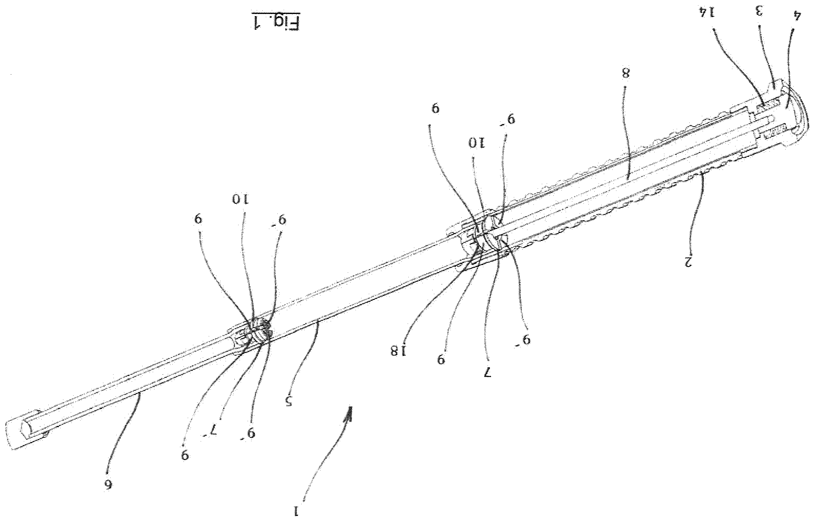

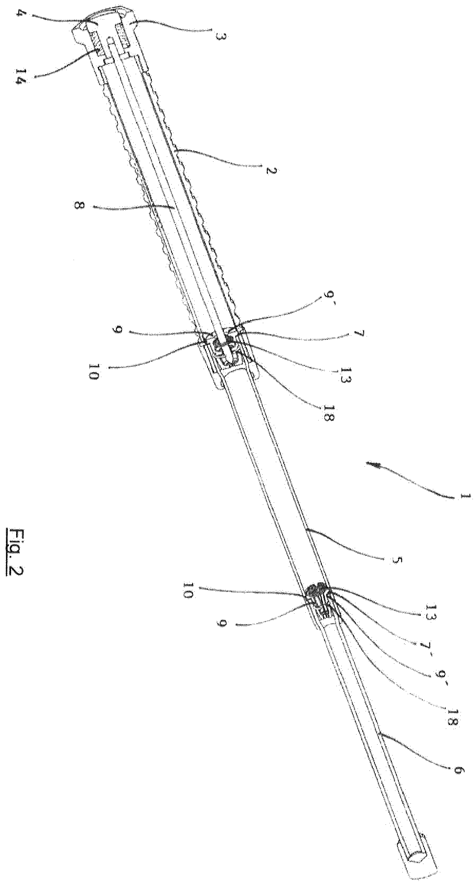

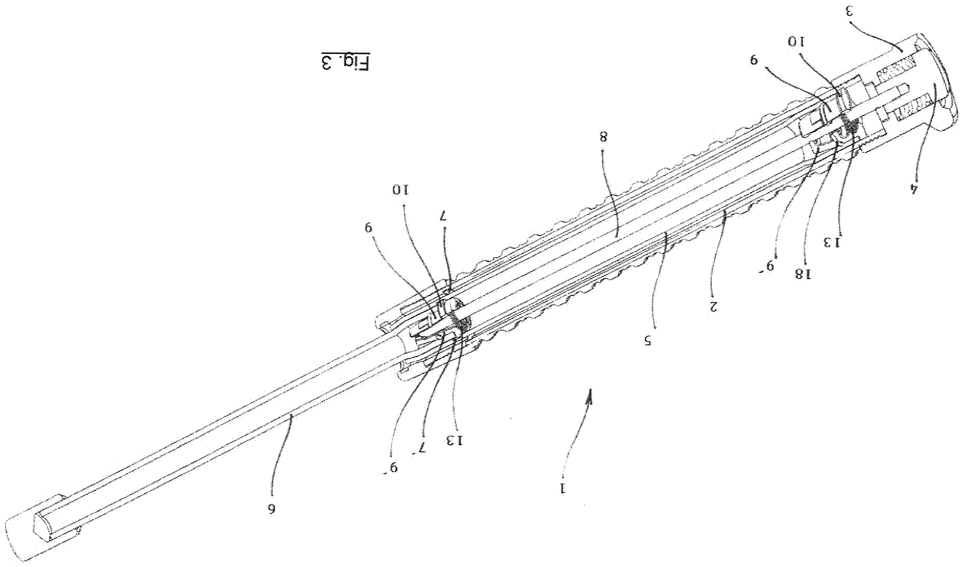

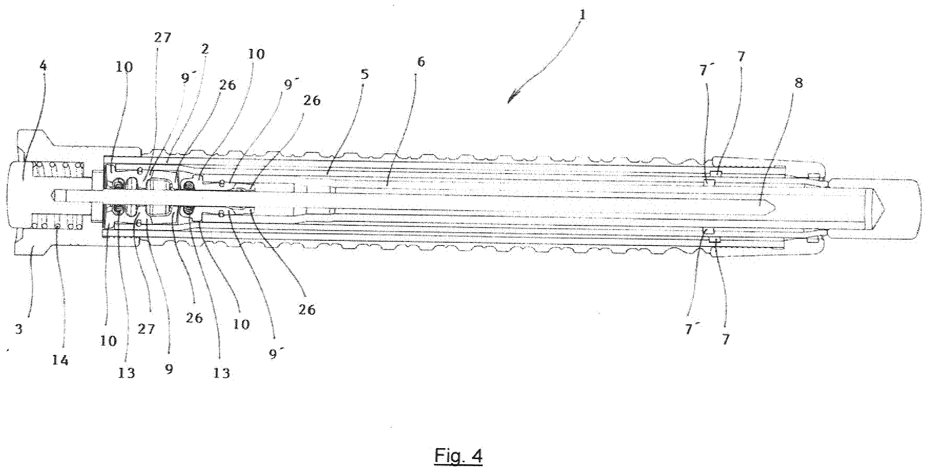

The expandable telescopic baton **1** consists of three cylindrical telescopic parts placed in each other. The tubular handle **2** has the largest diameter, is formed by a metal tube coated with a rubber or plastic coating, and on one side is terminated by terminal **3,** in which the button **4** is sliding-mounted on the spring **14.** The button **4** fits against the end of the release rod **8,** which extends in the axis of the handle **2** to its free end. The central tube **5** is mounted with an overlap, whose outer diameter is smaller than the inner diameter of the handle **2** so that the central tube **5** is sliding-mounted in the handle **2** and can be telescopically inserted and extended, while maintaining the required linear overlap so as not to completely fall out of the handle **2** in full extension. In the central tube **5**, the end tube **6** is further mounted, whose outer diameter is smaller than the inner diameter of the central tube **5** so that the end tube **6** is sliding-mounted in the central tube **5** and can be telescopically inserted and extended, while maintaining the required linear overlap so as not to completely fall out of the central tube **5** in full extension. To prevent the central tube **5** from being inserted back into the handle **2** and the end tube **6** from being inserted back into the central tube **5,** the handle **2** and the central tube **5** are provided with internal radial grooves **7, 7'.** In the extended position of the baton **1**, the movable radial projections **10** fit into these internal radial grooves **7**, **7'**, which are part of the central locking member mounted in the central tube **5** and the terminal locking member mounted in the end tube **6**. The extended position of the baton **1** is shown in Fig. 1 and Fig. 2. The movement of the radial projections **10** is actuated by the release rod **8**, the end of which in the extended state of the baton **1** after pressing the button **4** passes through the central locking member and retract the radial projections **10** from the internal radial groove **7** in the handle **2.** The central tube **5** with the central locking member is inserted into the handle **2,** wherein the release rod **8** still passes through the central locking member. This partially folded state of the baton **1** is shown in Fig. 3. The end tube **6** in the extended state is displaced along the central tube **5** towards the handle **2** until the end of the release rod **8** passes through the terminal locking member mounted in the end tube **6.** In this state, the radial projections **10** extend from the internal radial groove **7'** in the central tube 5, and the end tube **6** is inserted into the central tube **5**, whereby the baton **1** is in a fully folded state as shown in Fig. 4.

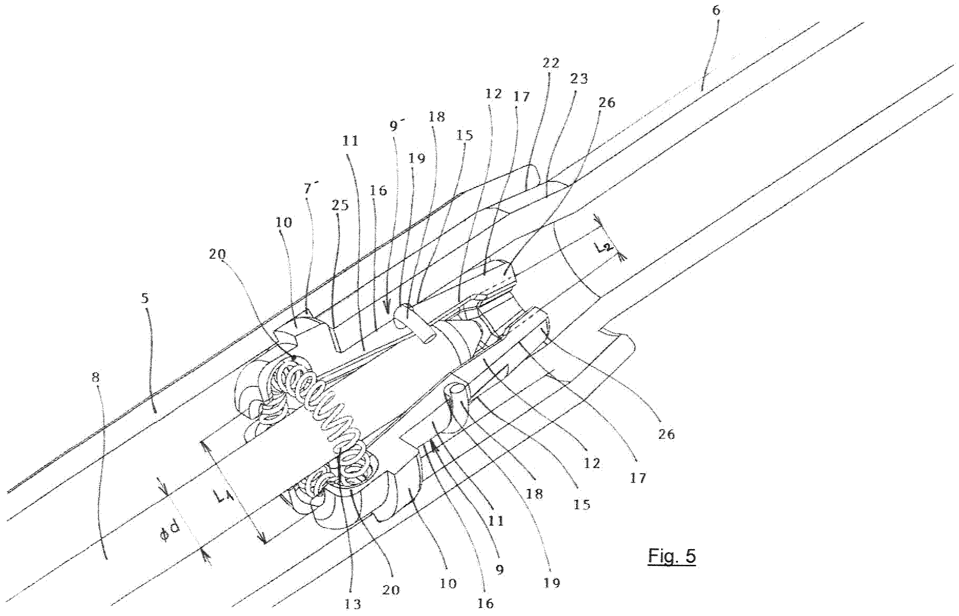

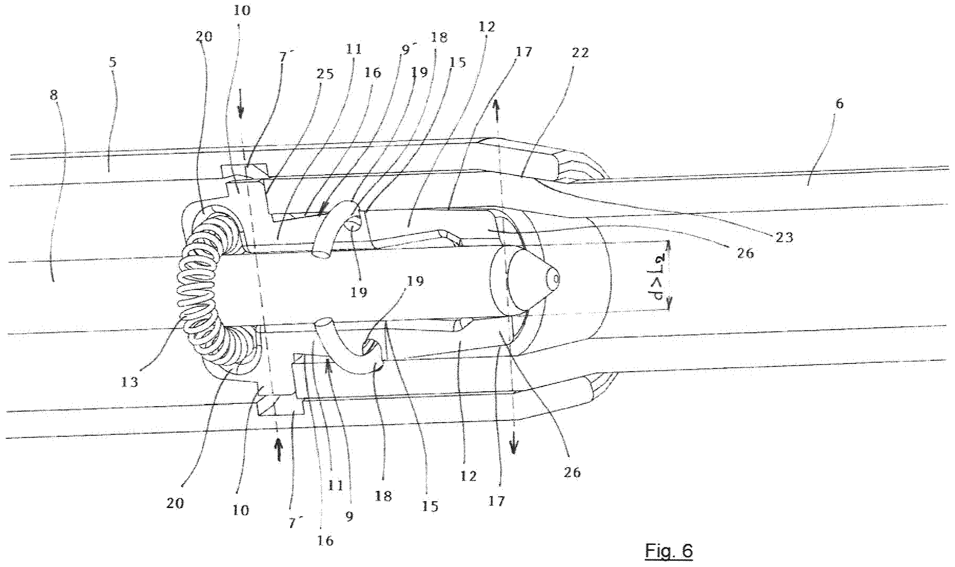

The design of the terminal locking member and the mounting of overlap of the end tube 6 in the central tube 5 is shown in Fig. 5 and Fig. 6. The central tube 5 has the conical part 21, the end tube 6 has the conical part 22. The conical parts 21, 22 fit against each other in the extended position of the end tube 6, thus defining precisely the mutual position of the tubes 5, 6 without clearance. Since the connection of conical parts 21, 22 is not self-locking, the mutual position of the tubes 5, 6 in the extended position is secured by the terminal locking member. Moreover, the conical parts 21, 22 of the tubes **5, 6** are connected again to the cylindrical parts of the tubes, and the end **25** of the cylindrical part of the end tube **6** is aligned with the edge of the internal radial groove **7** in the central tube **5**. The radial projection **10** of the terminal locking member is shaped so that when fitted into the internal radial groove **7'**, its one side fits against the end **25** of the end tube **6.** Very rigid and stable connection of the central tube **5** and the end tube **6** in the extended position is thus achieved. Fig. 5 and Fig. 6 also show the detailed construction of the terminal locking member.

The terminal locking member comprises two pairs of lever segments of the first order **9**, **9'**, arranged opposite to each other in the end tube **6** symmetrically to its axis. Fig. 5 shows a partial sectional view, where one segment **9'** is removed, Fig. 6 shows an axial sectional view, where one pair of segments **9**, **9'** is visible. Four segments **9**, **9'** are arranged to form a hollow cylindrical body, where the segments **9**, **9'** are distributed over its circumference at 90°. In another embodiment, the terminal locking member could also work with three or two segments **9**, **9'**.

The lever segments of the first order **9**, **9'** are made of metal, but may also be made of durable plastic or composite. Each segment **9**, **9'** is formed as a two-armed lever and comprises the first tilting arm **11** and the second tilting arm **12.** The first tilting arm **11** extends from the end tube **6** and bears the radial projection **10.** This means that the terminal locking member has four radial projections **10** fitting into the internal radial groove **7'** in the central tube **5,** each segment **9**, **9'** has one quadrant radial projection **10**.

The elongated parts of the first tilting arms **11** after the radial projections **10** also extend to the central tube **5** and are provided on their inner side with grooves **20,** in which the elastic element **13** is mounted, comprised of the metal coil in a toroidal shape. This elastic element **13** permanently separates the ends of the first tilting arms **11** and pushes the radial projections **10** into the internal radial groove **7'**. The end of the release rod **8** can pass through the centre of the elastic element **13** into the terminal locking member. However, the elastic member **13** may be of design known to the expert.

Part of the first tilting arms **11,** mounted in the end tube **6,** has the outer surface made in the shape of part of the cylindrical surface. The outer surface means surface closer to the inner wall of the end tube **6.** The second tilting arms **12,** connected in the end tube **6** to the first tilting arms **11**, have the outer surface in the shape of part of the conical surface. The transition between the first tilting arm **11** and the second tilting arm **12** forms the tilting edge **15** fitting against the inner wall of the end tube **6.** The lever segment of the first order **9**, **9'** may tilt over the tilting edge **15** to one or another side. The tilting means may be designed in another way than the tilting edge **15,** e.g. a projection in the groove, pin, etc., but the tilting edge **15** has the advantage that it is the most simple and economic way to manufacture, fits against the inner wall of the end tube **6** completely free of clearance and achieves precise positioning.

On the first tilting arms **11** and in the inner wall of the end tube **6,** there are recesses **19**, in which the securing means **18** formed of a spring ring is mounted. The securing means **18** fixes axially the position of the lever segments of the first order **9**, **9'** in the end tube **6.**

On the inner side, to be understood as the side closer to the axis of the tube 6, the lever segments of the first order **9**, **9'** are dimensionally adjusted so that in the position of fitting of the radial projections **10** into the internal radial groove **7'**, the smallest internal clear distance **L₂** between the second tilting arms **12** is smaller than the smallest internal clear distance **L₁** between the first tilting arms **11** and at the same time smaller than the diameter **d** of the release rod **8.** This is achieved so that at the end of the second tilting arms **12** on their inner side there are the release projections **26** with the edge in the shape of part of the ring for fitting against the circumference of the release rod **8.** When the release rod **8** extends inside the terminal locking member, it fits against the release projections **26**, thus separating the ends of the second tilting arms **12.** The lever segments of the first order **9**, **9'** are tilted over so that the first tilting arm **11** tilts through the resistance of the elastic element **13** and over the tilting edge **15** towards the axis of the end tube **6,** so that the radial projections **10** extend from the internal radial groove **7'** and the end tube **6** can be inserted into the central tube **5,** e.g. by hand pressure.

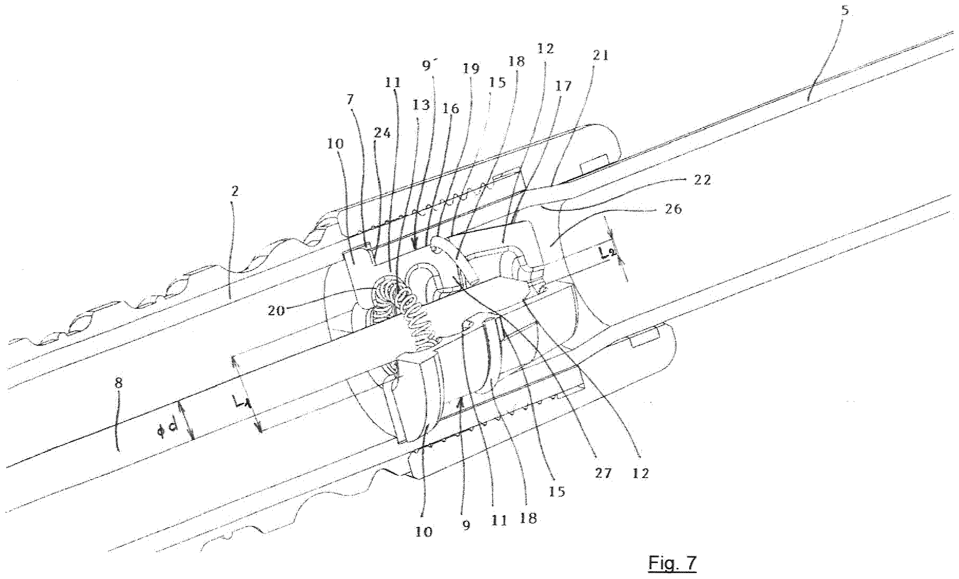

The central locking member, shown in Fig. 7, operates as the terminal locking member, with the difference that it is positioned in the central tube **5,** which has the conical part **22** fitting into the conical part **21** of the handle **2,** and the radial projections **10** fit into the internal radial groove **7** in the handle **2.** Fig. 4 and Fig. 7 also show an alternative embodiment of lever segments of the first order **9**, **9'**, where the elastic element **13** is positioned in the grooves **20** substantially opposite to the radial projections **10** and the segments **9**, **9'** are in the region between the first tilting arms **11** and the second tilting arms **12** on the inner side provided with guide projections **27** in the shape of part of the ring for fitting against the circumference of the release rod **8.** This embodiment provides guiding of the release rod **8** in the axis of the tube **5,** while allowing easier and gradual tilting of the segments **9**, **9'**.

### List of reference numerals

- 1: expandable telescopic baton
- 2: tubular handle
- 3: terminal
- 4: button
- 5: central tube
- 6: end tube
- 7: internal radial groove in the handle
- 7': internal radial groove in the central tube
- 8: release rod
- 9, 9': lever segment of the first order of the locking member
- 10: radial projection
- 11: first tilting arm
- 12: second tilting arm
- 13: elastic element
- 14: button spring
- 15: tilting edge
- 16: cylindrical surface
- 17: conical surface
- 18: securing means
- 19: recess
- 20: groove on the inner side of the first tilting arm
- 21: conical part of the handle
- 22: conical part of the central tube
- 23: conical part of the end tube
- 24: end of the central tube
- 25: end of the end tube
- 26: release projection
- 27: guide projection
- L₁: smallest internal clear distance of the first tilting arms of the segments of central and terminal locking members
- L₂: smallest internal clear distance of the second tilting arms of the segments of central and terminal locking members
- d: diameter of the release rod

## Claims

1. Expandable telescopic baton (1) suitable for the defence against attack by an attacker or in police, military and guard practice, said expandable telescopic baton consisting of a tubular handle (2) provided with a terminal (3) with a button (4), of a central tube (5) telescopically mounted with an overlap in the handle (2), of a end tube (6) telescopically mounted with an overlap in the central tube (5), where the handle (2) and the central tube (5) are provided with internal radial grooves (7, 7'), of a central locking member arranged in the central tube (5), of a terminal locking member arranged in the end tube (6), wherein the locking members are provided with radial projections (10) for fitting into the grooves (7, 7') in the extended state of the baton (1), and of a release rod (8) whose one end is connected with the button (4) and the other end fits into the locking members to retract their radial projections (10) from the grooves (7, 7') when the baton (1) is folded, wherein the central locking member and/or the terminal locking member comprise at least two lever segments of the first order (9, 9'), arranged opposite to each other in the tube (5, 6) around its axis, the said segments (9, 9') are formed by first tilting arms (11) and second tilting arms (12), wherein the first tilting arms (11) extend from tube (5, 6) and are provided with said radial projections (10) for fitting into the grooves (7, 7'), and second tilting arms (12) extend inside the tube (5, 6), wherein on the outer side the segments (9, 9') in the region between the first tilting arms (11) and the second tilting arms (12) are provided with tilting means for tilting the segments (9, 9') against the inner wall of the tube (5, 6), and securing means (18) for fixing the position of the segments (9, 9') in the tube (5, 6) against displacement, and wherein on the inner side the segments (9, 9') are provided with an elastic element (13) separating the ends of the first tilting arms (11) with said radial projections (10), and further wherein the segments (9, 9') on the inner side are dimensionally adjusted so that in the position of fitting of the radial projections (10) into the grooves (7, 7'), the smallest internal clear distance (L₂) between the second tilting arms (12) is smaller than the smallest internal clear distance (L₁) between the first tilting arms (11) and at the same time smaller than the diameter (d) of the release rod (8), **characterized in that** the segments (9, 9') on the inner side in the region between the first tilting arms (11) and the second tilting arms (12) are provided with guide projections (27) with the edge in the shape of part of the ring for fitting against the circumference of the release rod (8).

2. The expandable telescopic baton according to claim 1, **characterized in that** the tilting means for tilting of the segments (9, 9') against the internal wall of the tube (5, 6) is formed so that the outer side of the first tilting arm (11) has the shape of part of the cylindrical surface and the outer side of the second tilting arm (12) has the shape of part of the conical surface, wherein the shape transition between the first tilting arm (11) and the second tilting arm (12) forms the tilting edge (15) in the shape of part of the ring, fitting against the internal wall of the tube (5, 6).

3. The expandable telescopic baton according to claim 1 and 2, **characterized in that** the central locking member and/or the terminal locking member comprises two opposite pairs of segments (9, 9') arranged to form a hollow cylindrical body, where the segments (9, 9') are distributed over its circumference at 90°.

4. The expandable telescopic baton according to claim 1 through 3, **characterized in that** the securing means (18) are formed by a spring ring positioned in the recess (19) formed at the periphery of the first tilting arms (11) of the segments (9, 9') and in the inner wall of the tube (5, 6).

5. The expandable telescopic baton according to claim 1 through 4, **characterized in that** the elastic element (13) has a toroidal shape and is positioned in the grooves (20) on the inner side of the ends of the first tilting arms (11).

6. The expandable telescopic baton according to claim 1 through 5, **characterized in that** in the region of overlap, the handle (2) has the conical part (21) and the central tube (5) has the conical part (22), where the said conical parts (21, 22) fit against each other in the extended position of the central tube (5), and the end (24) of the central tube (5) is aligned with the edge of the internal radial groove (7) in the handle (2) so that in the extended position of the central tube (5), the radial projection (10) fits against the end (24) of the central tube (5).

7. The expandable telescopic baton according to claim 1 through 6, **characterized in that** in the region of overlap, the central tube (5) has the conical part (21) and the end tube (6) has the conical part (22), where the said conical parts (22, 23) fit against each other in the extended position of the end tube (6), and the end (25) of the end tube (6) is aligned with the edge of the internal radial groove (7) in the central tube (5) so that in the extended position of the end tube (6), the radial projection (10) fits against the end (25) of the end tube (6).

8. The expandable telescopic baton according to claim 1 through 7, **characterized in that** the segments (9, 9') on the inner side of the second tilting arms (12) are provided with release projections (26) with the edge in the shape of part of the ring for fitting against the circumference of the release rod (8).

9. The expandable telescopic baton according to claim 1 through 8, **characterized in that** the segments (9, 9') are made of metal.

## Patentansprüche

1. Der ausziehbare Teleskopschlagstock (1), geeignet zur Verteidigung gegen einen Angreifer, oder nutzbar in Polizei-, Militär-, und Wachdienstpraxis, welcher besteht aus dem mit dem Endstück (3) mit der Taste (4) versehenen röhrenförmigen Handgriff (2), aus dem mittleren Rohr (5), welches mit dem Übergriff teleskopisch im Handgriff (4) gelagert ist, aus dem Endrohr (6), welches mit dem Übergriff teleskopisch im mittleren Rohr (5) gelagert ist, wo der Handgriff (2) und das mittlere Rohr (5) mit inneren Radialnuten (7, 7') versehen sind, aus dem mittleren Verriegelungsglied, welches im mittleren Rohr (5) angeordnet ist, aus dem Endverriegelungsglied, welches im Endrohr (6) angeordnet ist, wo die Verriegelungsglieder mit Radialnasen (10) für das Einrasten in die Nuten (7, 7') im ausgeschobenen Zustand des Schlagstocks (1) versehen sind, und aus einer Entriegelungsstange (8), deren ein Ende mit der Taste (4) verbunden ist, und das andere Ende in die Verriegelungsglieder für das Ausschieben deren Radialnasen (10) aus Nuten (7, 7') beim Zusammenlegen des Schlagstocks (1) einrastet, wobei das mittlere Verriegelungsglied und/oder das Endverriegelungsglied wenigstens zwei zweiarmige Hebelsegmente (9, 9') erster Ordnung umfassen, welche gegeneinander im Rohr (5, 6) rund um seine Achse angeordnet sind, die Hebelsegmente (9, 9') durch erste Kipparme (11) und durch zweite Kipparme (12) gebildet sind, wobei die ersten Kipparme (11) aus dem Rohr (5, 6) heraustreten und mit Radialnasen (10) für das Einrasten in die Nuten (7, 7') versehen sind, und die zweiten Kipparme (12) ins Rohr (5, 6) eingreifen, wobei auf der Außenseite die Segmente (9, 9') im Bereich zwischen ersten Kipparmen (11) und zweiten Kipparmen (12) mit dem Kippmittel für das Kippen der Segmente (9, 9') gegen die innere Wandung des Rohrs (5, 6), und mit dem Verriegelungsmittel (18) für die Fixierung der Position der Segmente (9, 9') im Rohr (5, 6) gegen die Verschiebung versehen sind, und auf der Innenseite sind die Segmente (9, 9') mit dem Federelement (13) versehen, welches die Enden der ersten Kipparme (11) mit Radialnasen (10) voneinander drückt, und weiter sind die Segmente (9, 9') auf der Innenseite von der Form her so angepasst, dass in der Position des Einrastens der Radialnasen (10) in die Nuten (7, 7') der kleinste innere lichte Abstand (L₂) zwischen den zweiten Kipparmen (12) kleiner als der kleinste innere Lichte Abstand (L₁) zwischen ersten Kipparmen (11) und gleichzeitig kleiner als der Durchmesser (d) der Entriegelungsstange (8) ist **dadurch gekennzeichnet, dass** die Segmente (9, 9') auf der inneren Seite im Bereich zwischen ersten Kipparmen (11) und den zweiten Kipparmen (12) mit Führungsnasen (27) mit dem Rand in der Form eines Kreisteils für das Anliegen am Umfang der Entriegelungsstange (8) versehen sind.

2. Der ausziehbare Teleskopschlagstock nach dem Anspruch 1, **dadurch gekennzeichnet, dass** das Kippmittel für das Kippen der Segmente (9, 9') gegen innere Wandung des Rohrs (5, 6) so gebildet ist, dass die Außenseite des ersten Kipparmes (11) die Form eines Teils der zylindrischen Fläche hat, und die Außenseite des zweiten Kipparms (12) hat die Form eines Teils der konischen Fläche, wobei der Formübergang zwischen dem ersten Kipparm (11) und dem zweiten Kipparm (12) die Kippkante (15) in der Form eines Kreisteils bildet, welche an der inneren Wandung des Rohrs (5, 6) anliegt.

3. Der ausziehbare Teleskopschlagstock nach dem Anspruch 1 und 2, **dadurch gekennzeichnet, dass** das mittlere Verriegelungsglied und/oder das Endverriegelungsglied durch zwei gegenüberliegende Paare Segmente (9, 9') gebildet wird, welche in die Form des hohlen zylindrischen Körpers angeordnet sind, wo die Segmente (9, 9') an seinem Umfang je 90° verteilt sind.

4. Der ausziehbare Teleskopschlagstock nach dem Anspruch 1 bis 3, **dadurch gekennzeichnet, dass** das Verriegelungsmittel (18) durch den im Einstich (19) gelagerten Federring gebildet wird, wobei der Einstich am Umfang der ersten Kipparme (11) der Segmente (9, 9') und in der inneren Wandung des Rohrs (5, 6) hergestellt ist.

5. Der ausziehbare Teleskopschlagstock nach Ansprüchen 1 bis 4, **dadurch gekennzeichnet, dass** das Federelement (13) toroidförmig und in Nuten (20) auf der inneren Seite der Enden der ersten Kipparme (11) gelagert ist.

6. Der ausziehbare Teleskopschlagstock nach dem Anspruch 1 bis 5, **dadurch gekennzeichnet, dass** im Bereich des gegenseitigen Übergriffs der Handgriff (2) den konischen Teil (21) und das mittlere Rohr (5) den konischen Teil (22) hat, wobei die erwähnten konischen Teile (21, 22) in der ausgeschobenen Stellung des mittleren Rohrs (5) aneinander anliegen, und das Ende (24) des mittleren Rohrs (5) ist so angeordnet, dass es mit dem Rand der inneren Radialnut (7) im Handgriff (2) fluchtet, sodass in der ausgeschobenen Stellung des mittleren Rohrs (5) die Radialnase (10) auch am Ende (24) des mittleren Rohrs (5) anliegt.

7. Der ausziehbare Teleskopschlagstock nach Ansprüchen 1 bis 6, **dadurch gekennzeichnet, dass** im Bereich des gegenseitigen Übergriffs das mittlere Rohr (5) den konischen Teil (21) und das Endrohr (6) den konischen Teil (22) haben, wobei die erwähnten konischen Teile (22, 23) in der ausgeschobenen Stellung des Endrohres (6) aneinander anliegen, und das Ende (25) des Endrohres (6) ist so angeordnet, dass es mit dem Rand der inneren Radialnut (7) im mittleren Rohr (5) fluchtet, sodass in der ausgeschobenen Stellung des Endrohres (6) die Radialnase (10) auch am Ende (25) des Endrohres (6) anliegt.

8. Der ausziehbare Teleskopschlagstock nach dem Anspruch 1 bis 7, **dadurch gekennzeichnet, dass** die Segmente (9, 9') auf der inneren Seite der zweiten Kipparme (12) mit Entriegelungsnasen (26) mit dem Rand in der Form eines Kreisteils für das Anliegen am Umfang der Entriegelungsstange (8) versehen sind.

9. Der ausziehbare Teleskopschlagstock nach dem Anspruch 1 bis 8, **dadurch gekennzeichnet, dass** die Segmente (9, 9') aus Metall sind.

## Revendications

1. La matraque (1) télescopique pliante adaptée à la défense contre des attaques, ou dans la pratique de la police, de l'armée et de la garde, la matraque (1) étant composée d'un manche tubulaire (2) munie d'un manchon de fermeture (3) et d'un bouton poussoir (4), du tube central (5) logé avec chevauchement de manière télescopique dans le manche (4), d'un tube d'extrémité (6) logé avec chevauchement de manière télescopique dans le tube central (5) où le manche (2) et le tube central (5) sont munis de rainures intérieures radiales (7, 7'), de l'élément d'arrêt central disposé dans le tube central (5), de l'élément d'arrêt final disposé dans le tube d'extrémité (6), où les éléments d'arrêt sont munis de saillies radiales (10) pour s'insérer dans les rainures (7, 7') dans l'état dégagé de la matraque (1) et de la barre de libération (8), dont la première extrémité est reliée avec le bouton poussoir (4) et la seconde extrémité s'insère dans les éléments d'arrêt pour le dégagement de leurs saillies radiales (10) des rainures (7, 7') lors du pliage de la matraque (1), que l'élément d'arrêt central et/ou l'élément d'arrêt final constituent au moins deux segments de levier (9, 9'), disposés l'un contre l'autre dans un tube (5, 6) autour de son axe, constitué des premiers bras basculants (11) et deuxièmes bras basculants (12), où les premiers bras basculants (11) sortent du tube (5, 6) et sont munis de saillies radiales (10) pour s'insérer dans les rainures (7, 7') et les deuxièmes bras basculants (12) s'insèrent à l'intérieur du tube (5, 6), tandis que du côté extérieur les segments (9, 9') dans la zone entre les premiers bras basculants (11) et les deuxièmes bras basculants (12) sont munis d'un moyen inclinable pour incliner les segments (9, 9') contre le côté intérieur du tube (5, 6), et le moyen de sécurisation (18) pour la fixation de la position des segments (9, 9') dans le tube (5, 6) contre déplacement, et du côté intérieur sont les segments (9, 9') munis de l'élément souple (13) repoussant les extrémités des premiers bras basculants (11) et des saillies radiales (10), et puis les segments (9, 9') sont du côté intérieur adaptés au niveau de leur forme pour que dans la position de l'insertion des saillies radiales (10) dans les rainures (7, 7') la distance intérieure la plus petite (L₂) entre les deuxièmes bras basculants (12) est plus petite que la distance intérieure la plus petite (L₁) entre les premiers bras basculants (11) et en même temps plus petite que le diamètre (d) de la barre de libération (8) **caractérisée en ce que** les segments (9, 9') sont du côté intérieur dans la zone entre les premiers bras basculants (11) et les deuxièmes bras basculants (12) munis de saillies de guidage (27) avec le bord sous forme d'une partie d'un cercle pour reposer sur la circonférence de la barre de libération (8).

2. La matraque télescopique pliante selon la revendication 1, **caractérisée en ce que** le moyen inclinable pour l'inclinaison des segments (9, 9') contre la paroi intérieure du tube (5, 6) est constitué de telle façon que le côté extérieur du premier bras basculant (11) a la forme d'une partie de la surface cylindrique et le côté extérieur du deuxième bras basculant (12) a la forme d'une partie de la surface conique et le passage entre le premier bras basculant (11) et le deuxième bras basculant (12) forme un bord inclinable (15) sous forme d'une partie d'un cercle reposant sur la paroi intérieure du tube (5, 6).

3. La matraque télescopique pliante selon les revendications 1 et 2, **caractérisée en ce que** l'élément d'arrêt central et/ou l'élément d'arrêt final sont formés de deux couples opposés de segments (9, 9'), disposés dans la forme d'un corps cylindrique creux où les segments (9, 9') sont répartis sur sa circonférence tous les 90°.

4. La matraque télescopique pliante selon les revendications 1 à 3, **caractérisée en ce que** le moyen de sécurisation (18) forme une bague à ressort dans la gorge (19) créée sur la circonférence des premiers bras basculants (11) des segments (9, 9') et dans la paroi intérieure du tube (5, 6).

5. La matraque télescopique pliante selon les revendications 1 à 4, **caractérisée en ce que** l'élément souple (13) a une forme toroïdale et est logé dans les rainures (20) du côté intérieur des extrémités des premiers bras basculants (11).

6. La matraque télescopique pliante selon les revendications 1 à 5, **caractérisée en ce que** dans la zone du chevauchement mutuel, le manche (2) a une partie conique (21) et le tube central (5) une partie conique (22), tandis que les parties coniques (21, 22) reposent l'une sur l'autre dans la position dégagée du tube central (5) et l'extrémité (24) du tube central (5) est disposé avec le bord de la rainure intérieure radiale (7) dans le manche (2), donc dans la position dégagée du tube central (5) la saillie radiale (10) repose également sur l'extrémité (24) du tube central (5).

7. La matraque télescopique pliante selon les revendications 1 à 6, **caractérisée en ce que** dans la zone du chevauchement mutuel le tube central (5) possède une partie conique (21) et le tube d'extrémité (6) une partie conique (22), tandis que les parties coniques (22, 23) reposent l'une sur l'autre dans la position dégagée du tube d'extrémité (6) et l'extrémité (25) du tube d'extrémité (6) est disposée le long du bord de la rainure intérieure radiale (7) dans le tube central (5), donc dans la position dégagée du tube d'extrémité (6) la saillie radiale (10) repose même sur l'extrémité (25) du tube d'extrémité (6).

8. La matraque télescopique pliante selon les revendications 1 à 7, **caractérisée en ce que** les segments (9, 9') sont du côté intérieur des deuxièmes bras basculants (12) munis des saillies de libération (26) avec le bord sous forme d'une partie d'un cercle pour reposer sur la circonférence de la barre de libération (8).

9. La matraque télescopique pliante selon les revendications 1 à 8, **caractérisée en ce que** les segments (9, 9') sont métalliques.
